**Europäisches Patentamt**

(19) **European Patent Office**

**Office européen des brevets**

(11) Publication number: **0 037 384**

**A1**

(12) # EUROPEAN PATENT APPLICATION

(21) Application number: **81850052.2**

(22) Date of filing: **24.03.81**

(51) Int. Cl.³: **F 16 K 31/383**

(30) Priority: **28.03.80 SE 8002424**

(43) Date of publication of application:
**07.10.81 Bulletin 81/40**

(84) Designated Contracting States:
**AT BE CH DE FR GB IT LI NL**

(71) Applicant: **Andersson, Bo Reiner**
**Venusvägen 11**
**S-590 60 Ljungsbro(SE)**

(72) Inventor: **Andersson, Bo Reiner**
**Venusvägen 11**
**S-590 60 Ljungsbro(SE)**

(74) Representative: **Delmar, John-Ake**
**Östermalmsgatan 45**
**S-114 26 Stockholm(SE)**

(54) **High-pressure seat valve.**

(57) A high-pressure seat valve comprises a valve housing (1) having a main flow passage (2) with a valve seat (3) therein, a valve body (4) being resiliently biased against said seat (3), and at least one passage for a control flow to a control unit, (7) said control flow being branched-off from the main flow. The control unit (7) is adapted to regulate the control flow and to control by means of a control member located in the main flow passage also the main flow as a function of the control flow by continuous variation of the position of the valve body (4) between closed and fully open position, the valve seat (3) furthermore being surrounded by a cylindrical wall (8) spaced radially outwardly of the seat (3) and extending axially away therefrom, within which wall (8) the valve body (4) formed as a piston is closely slidably mounted. The control member comprises at least one connecting passage (6) in the cylindrical wall (8) and/or in the peripheral surface of the valve body (4). For providing the seat valve to operate as an adjustable control valve in high-pressure uses, the valve is distinguished in that the connecting passage (6) extends between the input connection (2a) of the valve and the space (5) located at the valve body end remote from the valve seat (3) and forms a connecting passage (6), the throw-flow area of which increases with increasing distance of the valve body (4) from the valve seat (3), whereby a self-adjustment of the valve body (4) is obtained corresponding to variations of the flow through the control unit (7).

Fig. 2

The present invention refers to a seat valve particularly for high pressures and comprising a valve housing having a main flow passage with a valve seat therein, a valve body being resiliently biased against said seat, and at least one passage for a control flow to a control unit, said control flow being branched-off from the main flow, the control unit being adapted to control the control flow and to control by means of a control member located in the main flow passage also the main flow as a function of the control flow by continuous variation of the position of the valve body between closed and fully open position, the valve seat furthermore being surrounded by a cylindrical wall spaced radially outwardly of the seat and extending axially away therefrom, within which wall the valve body formed as a piston is closely slidably mounted and the control member comprises at least one connecting passage in the cylindrical wall and/or in the peripheral surface of the piston.

Up to now, in many systems, particularly hydraulic systems, seat valves most often have been controlled by means of fluid pressures, so-called pilot pressures, and have then been controllable only on-off, i.e. to fully closed or fully opened position. For providing a continuous control of a flow other common types of valves therefore have been required, such as slide valves, which suffer, however, from the drawback of internal leakage. Seat valves are being used more and more, however, i.a. as elements in directional control valves. Among the advantages of seat valves is the freedom from leakages and the fact that the closing-opening sequences easily can be changed. In order to still further widen the possibilities for use of seat valves many attempts have been made for providing a continuous control also of said valves between opened and closed position. According to one suggestion the seat valve is continuously controlled by means of electronic equipment and a servo valve. In this arrangement the position of the valve body is detected by an induction position-sensing means and compared with a predetermined nominal value in an amplifier. A differential between said values will adjust the servo valve such that equilibrium finally is obtained. The greatest drawback of said valve, however, is the fact that the same is very complicated in its structure and hence i.a. liable to disturbances and expensive.

According to another suggestion a kind of control of the main flow could be obtained by suitable technical instrumentalities by means of a control flow branched-off from the main flow itself. This suggestion has been disclosed in the Swedish patent 367,242. The structure disclosed therein and comprising a movable diaphragm can be utilized, however, only at lower pressures but particularly within the hydraulic field of today there is a great demand for a valve of this kind suitable for the high pressures of 400 bar or more present in said field.

The main object of the present invention thus is to provide a valve suitable for such high hydraulic pressures. This object is obtained by means of a seat valve distinguished in that the connecting passage extends between the input connection of the valve and the space located at the piston end remote from the valve seat and forms a restricting opening, the through-flow area of which increases with increasing distance of the valve body from the valve seat. The main advantage of this arrangement is that it is obtained a self-adjustment of the valve body corresponding to variations of the flow through the control unit. The inventive valve also has a plurality of advantages. First of all, it is
responsive and reliable and easy to manufacture. It is
versatile in use and can be utilized for most fluids including air. Further advantages will be evident from the following detail disclosure.

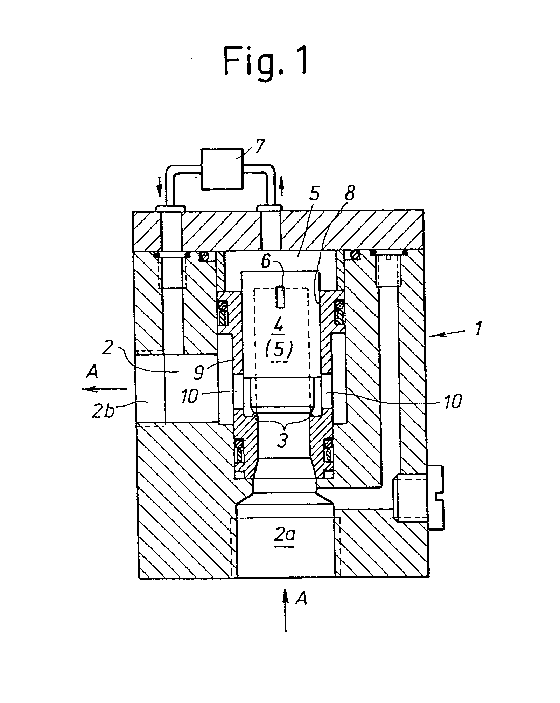

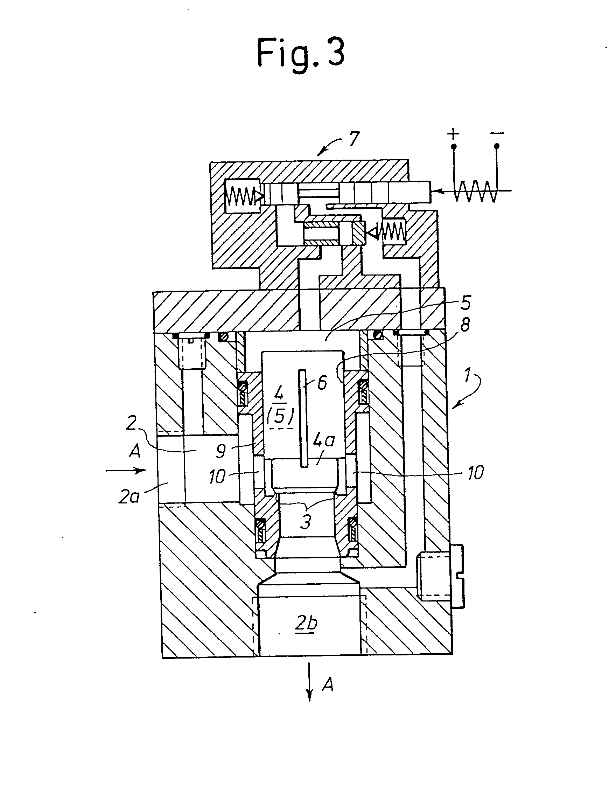

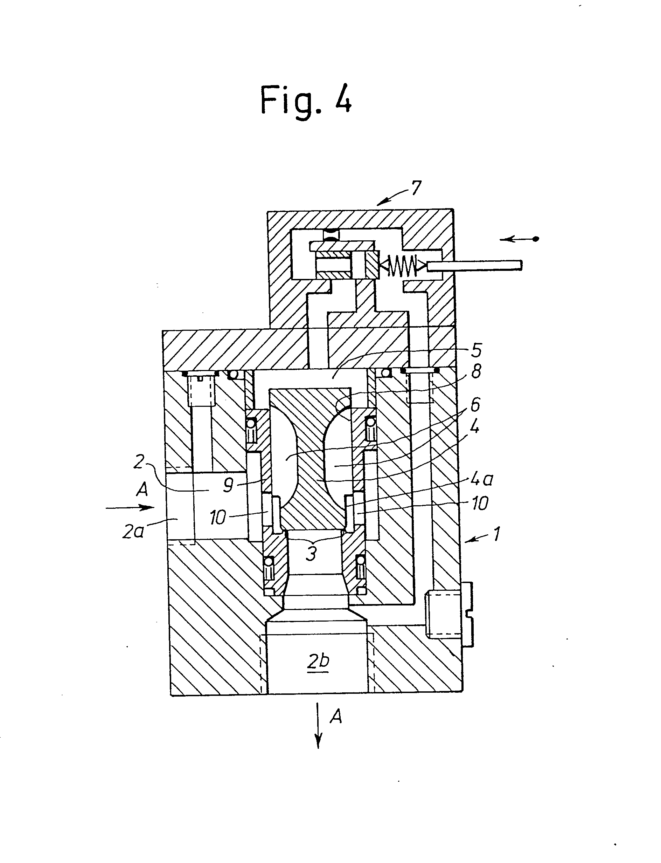

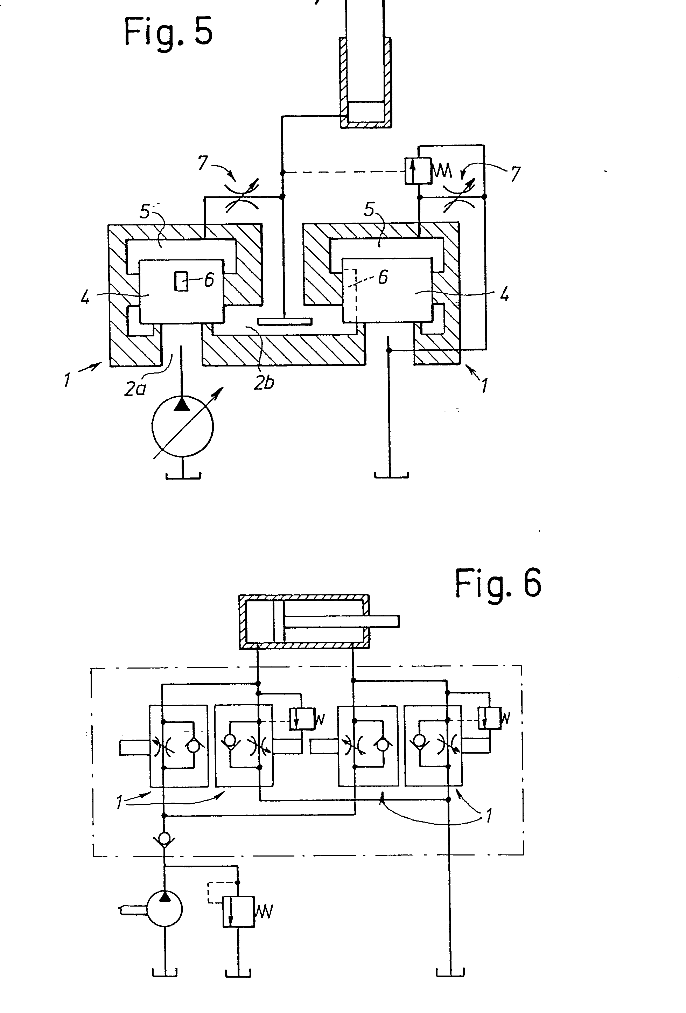

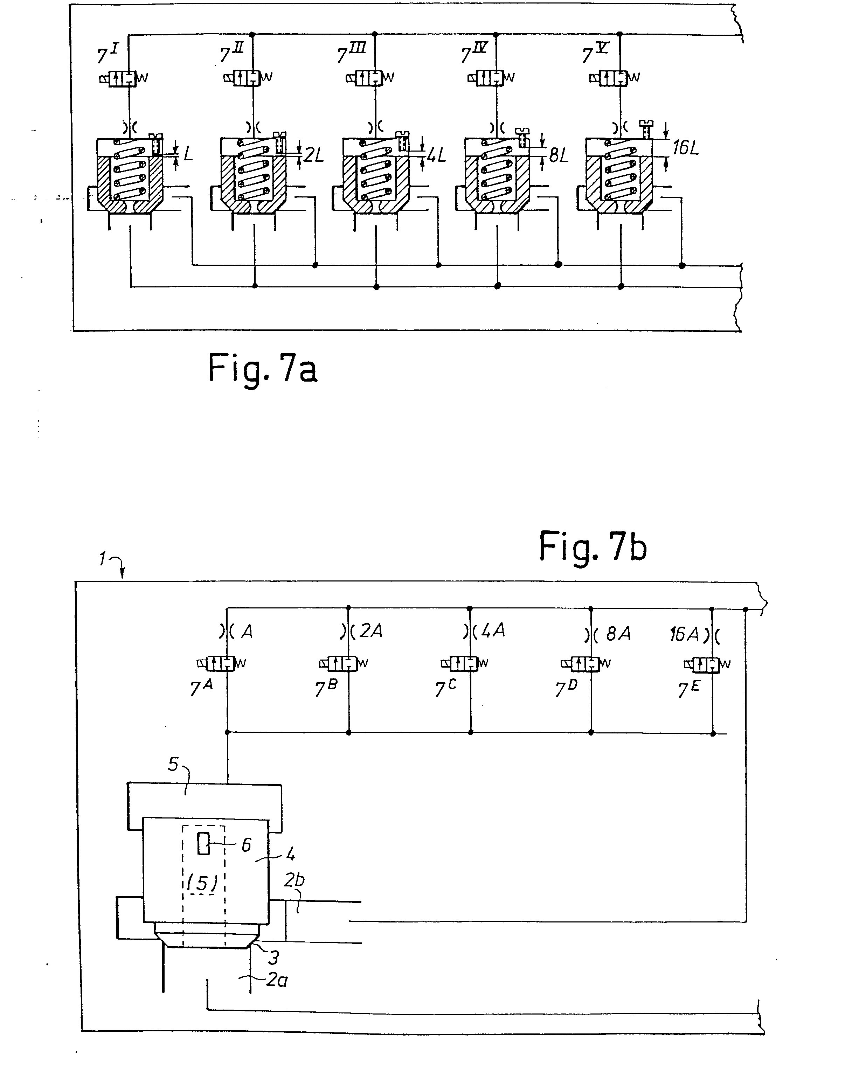

By way of example the invention will be further
described below with reference to the accompanying drawings
of which Fig 1 is a diagrammatical side elevation of a
first embodiment of the valve according to the invention,

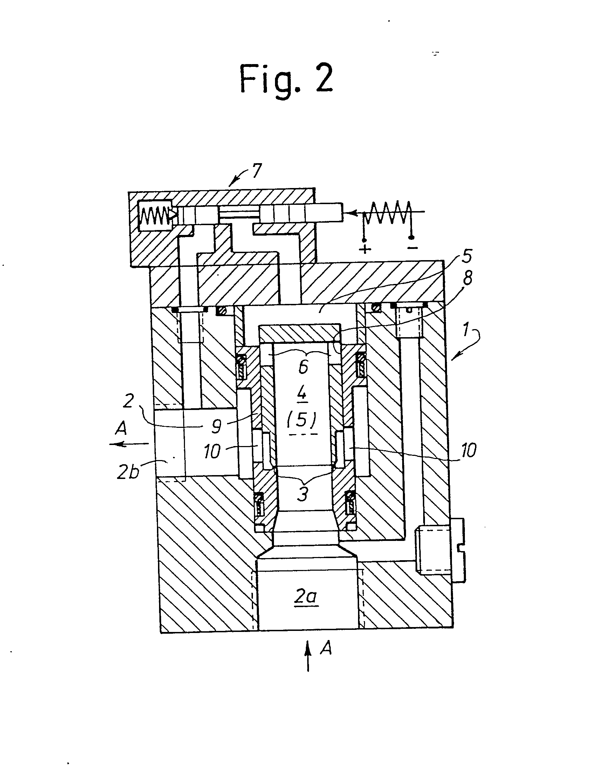

Fig 2 is a similar view in which, however, the external
control unit has the form of a variable restriction, Fig 3
is a cross-sectional side elevation of a valve according
to the invention designed for the opposite direction of
a flow and with an external control unit in the form of a
small-rate constant flow valve, Fig 4 is a sectional side
elevation of a further embodiment of the invention adapted
for the same reversed main flow direction as the valve
according to Fig 3 but according to another embodiment and
also with another embodiment of a control unit in the form
of a constant flow valve, Fig 5 is a diagrammatical view
of how two valves according to the invention can be connected in order to form a directional valve for control of for
instance the movement of a single-acting pressure cylinder,
Fig 6 is a diagrammatical view of how four valves according
to the invention are to be connected for the control of a
double-acting pressure cylinder and Fig 7a illustrates diagrammatically how digital control of a flow could be obtained by prior art valves while Fig 7b diagrammatically
illustrates how the same digital control in a much simpler
way can be obtained by means of the valve according to the
present invention.

As is illustrated in the drawings and particularly Fig 1 a seat valve according to the invention comprises a valve housing 1 having a main flow passage 2 for a
main flow in the direction of the arrows A. Between an input connection 2a and an output connection 2b is located
in said main flow passage 2 a valve seat 3 and a valve body or cone 4 is resiliently biased against said seat. Furthermore there is a passage 5 for a control flow to a control unit 7, here located outside the valve housing 1, the control flow being branched-off from the main flow. Said passage 5 comprises a cavity within the valve body, said cavity extending from the end of the valve body 4 adjacent the seat and by means of at least one connecting passage 6 connected to the chamber which is located at the end of the valve body remote from the valve seat and further leads to the control unit 7.

As also illustrated the valve seat 3 is formed with a surrounding cylindrical wall 8 spaced radially outwardly of the seat. Said wall 8 extends axially away from the seat 3 and within the wall 8 the valve body made as a cylindrical piston 4 is slidably mounted with a close fit to the wall 8. In the wall 8 is closely adjacent the seat 3 located at least one opening 10 for connection with the output portion 2b of the passage 2.

According to the invention the connecting passage 6 is arranged and made such that it forms a restriction, the through-flow area of which increases with increasing distance of the valve body 4 from the seat 3. In Fig 1 this has been obtained in that the connecting passage has been made as two diametrically opposing ports with axial oblong shape and extending from the internal cavity 5 to the peripheral surface of the piston 4. The oblong ports 6 are spaced from the surface of the valve body 4, which is adapted to engage the seat 3 such that the end of the ports 6 remote from said surface lie somewhat beyond a step or outermost radial end edge of the cylindrical wall 8 surrounding the piston 4. A small connection for pressure fluid from the main flow passage 2 to the control unit 7 thus always will be present. As soon as the control unit 7 is actuated for admitting a control flow, pressure fluid flows through the restricted connecting passage 6 and the valve body 4 will be raised from the seat 3 as much as required for establishing equilibrium between the pressure in the cham-

5

ber 5, which pressure acts in a closing direction on the valve body 4, and the fluid pressure in the passage 2. The greater control flow admitted through the control unit 7, the more the valve body 4 thus will be raised from the seat 3 and the greater will the main flow be in the passage 2.

In the valve according to the invention the main flow through the passage 2 thus will be a copy of the control flow through the control unit 7, however at a correspondingly larger scale dependent on the area differential between the control flow and main flow passages. Therefore, the valve can be considered as a flow amplifier. In the opposite direction of flow to the one illustrated in Fig 1 the valve is capable of freely admitting flow past the valve body 4. This is an advantage in many practical connections. Since the valve body 4 does not either need to be mechanically biased against the seat 3 by means of a return spring or the like the pressure drop in backwards direction can be made small which is of great importance if there are risks for cavitation.

Consequently, the valve according to the invention can be said to copy the flow characteristics of the control unit 7 by an amplification coefficient independent of the kind of characteristics. This provides for a wide variety of uses of the valve and some example of such uses will be given in the following in connection with other embodiments of the detail design of the valve.

In Fig 2 it is thus shown a valve having the same direction of flow as in Fig 1 but with the valve body 4 illustrated in a position turned 90° relative said figure, the valve body furthermore being illustrated in a longitudinal section. In said embodiment the control unit 7 consists of a common variable restriction or orifice and this means that the valve as a whole will behave as such a restriction. An advantage of the valve according to the invention is that since only a small portion of the total flow passes through the control unit 7, the adjustment forces on said unit can be made small. This implies that the valve as a whole may be controlled by small forces and therefore it can easily be remote controlled, for instance by means of an electric signal such as indicated.

Another embodiment of the valve according to the invention is shown in Fig 3 and is adapted for a main flow in opposite direction to the one illustrated in Figs 1 and 2. In order to provide for the same operation of the valve, the valve body 4 now is made solid, i.e. without any internal cavity 5 and the connecting passage 6 is not constituted by ports in this case but by at least one longitudinal slot or groove in the peripheral surface of the piston 5.

As before the end of the connecting passage 6 remote from the valve seat 3 now is located immediately beyond the outer radial end edge of the cylindrical wall 8 surrounding the piston 4, but said passage 6 extends furthermore in the direction towards the end of the piston 4 adapted for engaging the valve seat and into a portion 4a of the piston situated adjacent said surface and having reduced diameter for providing a passage which through the opening 10 in the wall 8 is connected with the inlet portion 2a of the main flow passage. For exemplifying purposes, in this embodiment the control unit 7 has been illustrated as a small constant flow valve for small flow rates, a pressure reduction valve maintaining a constant pressure through a variable restriction. Hence the valve as a whole will operate as a constant flow valve for great flows.

Also in Fig 4 the control unit 7 has been illustrated as a constant flow valve although having another structural design than in the control unit 7 of Fig 3. The pressure drop over the stationary restriction and hence the flow is adjustable by means of the position of the control piston. Similar to the variable restriction said control unit easily can be designed for electric remote control. In the embodiment of the valve illustrated in Fig 4, which is adapted for the same opposite flow direction as Fig 3, the valve body 4 also has the same design as according to said last-mentioned figure but has been illustrated in a posi-
tion turned 90° relative to Fig 3 and in a longitudinal section.

By a combination of a plurality of valves according to the invention interesting advantages also can be
achieved. In Fig 5 thus is illustrated how a directional valve
action in a control of a single-acting pressure cylinder can
be obtained by means of two valves. For this control action
two valves are required, namely one for raising movements
and one for lowering movements. In the embodiment illustrated in Fig 5 the two valves are controllable by means of
variable restrictions and therefore the speed can be continuously varied in both directions. Should said valves be
substituted by constant flow valves, a load-independent
speed control may be obtained. The directional valve of Fig
5 also is equipped with a pressure limitation pilot which
provides the valve with a pressure limitation action which
protects the cylinder against excessive pressures. The
pressure limitation pilot detects the pressure of the cylinder connection while controlling the flow through the valve.

If a double-acting cylinder is to be controlled,
four valves according to the invention are required and how
said valves are arranged and cooperate has been further illustrated in Fig 6, however, only by means of symbols. Also in
this case the directional valve is provided with pressure limitation valves for protection of the cylinder against excessive pressures. Owing to the action of the valve as a check
valve in the backward direction an anti-cavitation action in
the backward direction is automatically obtained. This is an
advantage which is particularly apparent when controlling
rotating machines. In such cases the check valve of the
pump conduit prevents an unintentional lowering motion of
the cylinder when the pump fails although the valve also can
be closed without pump pressure. The check valve is also
required when a protection against hose ruptures is desired.

Of course, the valve according to the invention can be modified in many ways within the scope of the
accompanying claims. Thus the connecting passage 6 need not
necessarily be arranged in the valve body 4 or only therein
but can be wholly or partially arranged in the cylinder wall
8. The main thing only is that the passage serves its purpose
to connect the control unit 7 with the input connection 2a
of the main flow passage 2 and that the passage acts as a
restriction with an area of flow increasing with increasing
distance of the valve body 4 from the seat 3. In Figs 1-4 of
the drawing the valve has been illustrated in a so-called
"cartridge" shape now common in the modern hydraulic control
technology. By this expression it is to be understood that
the cylinder wall 8 is formed on the inner surface of a
cylindric sleeve 9, which is slidable into a corresponding
cavity in the valve housing 1 while being sealed by means
of e.g. O-rings. In the same sleeve 9 also the seat 3 is
formed and therefore the valve becomes easy to maintain and
exchange. The cartridge embodiment also allows mounting
of the valve in series in one and the same valve housing.

A particularly interesting advantage of the
valve according to the invention is that it is far much more
suitable for digital control than prior seat valves. Many
components of hydrostatic transmissions are namely today
controlled electrically or electro-hydraulically and the
control signals usually are analog signals. There is, however, an obvious tendency within the technology towards a fast
increasing use of micro computers or processors as aids for control,
regulation and detecting. Here the digital technology
affords a number of advantages, i.a. in that unique possibilities are given for optimizing control processes. Detection
of operation conditions also can be made in a much more
rational manner than when using only analog technology.
The electro-hydraulic signal transducers of systems controlled by micro processors must be adapted to the digital control technology. Hitherto this has almost exclusively been
achieved in that analogue control means through digital/
analog transducers are controlled by the processor. Such analog control means are complicated however and expensive in manufacture and therefore many attempts have been made to provide direct digitally controllable transducers. Up to now, only very few principles have been put into practical use as far as digitally controlled valves are concerned, namely step motor drives, pulse or frequency modulation of small fast ball valves, electro-mechanical devices and electrically controlled binary-balanced two-way valves. The three first-mentioned principles are either complicated and expensive or suffer from other essential disadvantages. Only the last-mentioned principle has turned out to be sufficiently simple and is illustrated as example in Fig 7a of the drawings. A number of solenoid-controlled valves $7^{I-V}$ have throw-flow areas selected in predetermined mutual relationship dependent on the desired spacing between the control steps or "dissolution power" and each such valve controls its corresponding main valve, said main valves also having correspondingly selected mutual relationships between the areas of throw-flow. Said type of digital valves most often can be directly (through power transistors) connected to the output of a computer. The valves are reliable and relatively fast but for a greater number of control steps they become big and unhandy due to the corresponding increase of the number of great main valves. The opening and closing times are dependent of the spring force of the main valve and are short times required, the spring force must be great. This gives rise to a great pressure drop over the valve.

In Fig 7b of the drawing it has been illustrated an example of a corresponding arrangement of a digital control by means of one single valve according to the invention which then in itself simultaneously replaces all the main valves otherwise needed. This single main valve is controlled by a number of control units 7A-7E, which number is required for providing the necessary spacing between the control steps. A suitable number may be five, as illustrated, which provides for a distance between the control steps of about 3 per cent.

What we claim is:

A seat valve particularly for high pressures and comprising a valve housing having a main flow passage with a valve seat therein, a valve body being resiliently biased against said seat, and at least one passage for a control flow to a control unit, said control flow being branched-off from the main flow, the control unit being adapted to control the control flow and to control by means of a control member located in the main flow passage also the main flow as a function of the control flow by continuous variation of the position of the valve body between closed and fully open position, the valve seat furthermore being surrounded by a cylindrical wall spaced radially outwardly of the seat and extending axially away therefrom, within which wall the valve body formed as a piston is closely slidably mounted and the control member comprises at least one connecting passage in the cylindrical wall and/or in the peripheral surface of the piston, characterized in that the connecting passage extends between the input connection of the valve and the space located at the piston end remote from the valve seat and forms a restricting opening, the throw-flow area of which increases with increasing distance of the valve body from the valve seat, whereby a self-adjustment of the valve body is obtained corresponding to variations of the flow through the control unit.

# Fig. 1

# Fig. 2

# Fig. 3

Fig. 4

Fig. 5

5/6

7

7

5

5

6

6

4

4

1

1

2a

2b

Fig. 6

1

1

1

Fig. 7a

Fig. 7b

## EUROPEAN SEARCH REPORT

European Patent Office

| Category | Citation of document with indication, where appropriate, of relevant passages | Relevant to claim |
|---|---|---|
| | DE - A - 2 252 543 (CHWOSCHNJANSKIJ et al.)<br>* fig. 1 *<br>-- | 1 |
| | DE - B - 1 804 858 (DANFOSS)<br>* fig. 1 *<br>-- | 1 |
| | DE - C - 262 224 (WAGNER)<br>* page 1, line 66 to page 2, line 31; fig. 1 *<br>-- | 1 |
| | DE - C - 241 930 (LOMBARD)<br>* fig. 2*<br>-- | 1 |
| | DE - C - 241 913 (IVERSEN)<br>* fig. 1 *<br>-- | 1 |
| A | DE - C - 179 157 (ANDE)<br>-- | |
| D | SE - B - 367 242 (HAYDAY VALVE AND EQUIPMENT) | |

**DOCUMENTS CONSIDERED TO BE RELEVANT**

**CLASSIFICATION OF THE APPLICATION (Int. Cl.³)**

F 16 K  31/383

**TECHNICAL FIELDS SEARCHED (Int. Cl.³)**

F 16 K  31/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 11-06-1981 | SCHLABBACH |

EPO Form 1503.1  06.78